# EUROPÄISCHE PATENTANMELDUNG

(11) **EP 0 733 400 A1**
(43) Veröffentlichungstag der Anmeldung: **25.09.1996**
(21) Anmeldenummer: 96104241.3
(22) Anmeldetag: 18.03.1996
(51) Int. Cl.: B01J 8/24, B01J 8/18, B01D 53/10, B01D 53/74

(54) **Gaseinlass zum Zuführen von Gas in einen Behälter**

(30) Priorität: 21.03.1995 DE 19510212
(71) Anmelder: GRAF-EPE GmbH, 61381 Friedrichsdorf (DE)
(72) Erfinder: Graf, Rolf, Dr., 61381 Friedrichsdorf (DE)
(74) Vertreter: Schlagwein, Udo, Dipl.-Ing.

(57) **Zusammenfassung**

Eine als Gaseinlaß ausgebildete, vertikal anzuordnende Venturidüse (2) hat einen Venturihals (5) und einen Diffusor (6) zum Zuführen von Gas an der Unterseite eines senkrecht von Gas durchströmten Behälters (1). Eine Feststoff-Abweiseinrichtung (7) in der Wandung des Diffusors (6) lenkt aus dem Behälter (1) entlang der Wandung des Diffusors (6) nach unten in den Venturihals (5) rutschende Feststoffe von der Wandung weg in einen mittleren Bereich des Venturihalses (5).

## Beschreibung

Die Erfindung betrifft einen Gaseinlaß zum Zuführen von Gas an der Unterseite eines senkrecht von Gas durchströmten Behälters, welcher von dem Gas in einem Schwebezustand gehaltene Feststoffe enthält, beispielsweise einen Windsichter, einen Trockner oder einen Reaktor, wobei der Gaseinlaß eine vertikal anzuordnende Venturidüse mit einem Venturihals und einem Diffusor hat.

Bei einem Gaseinlaß der vorstehenden Art treten Probleme auf, wenn der von ihm in einen Behälter geführte Gasstrom bei Teillastbetrieb unterhalb eines bestimmten Wertes sinkt. Die Strömungsgeschwindigkeit in dem Behälter bzw. in der Venturidüse wird dann so gering, daß die Feststoffe nicht mehr vom Gasstrom gehalten werden, sondern aus dem Behälter heraus in den Venturihals rutschen.

Wenn von vornherein mit stark schwankenden Gasmengen oder einem großen Gasmengenbereich zu rechnen ist, dann kann man statt eines großen Behälters mehrere kleine Behälter parallel zueinander vorsehen und bei abnehmender Gasmenge einzelne Behälter vollständig abschalten. Eine solche Betriebsweise ist jedoch aufwendig. Weiterhin ist die Anordnung mehrerer kleiner Behälter anstelle eines einzigen, großen Behälters teurer.

Der Erfindung liegt das Problem zugrunde, einen Gaseinlaß der eingangs genannten Art so auszubilden, daß ein Rückfließen von Feststoffen entgegen der Strömungsrichtung des Gases erst bei einem möglichst geringen Gasdurchsatz eintritt.

Dieses Problem wird erfindungsgemäß gelöst durch eine Feststoff-Abweiseinrichtung zum Ablenken von entlang der Wandung des Diffusors nach unten in den Venturihals rutschenden Feststoffen von der Wandung weg in einen inneren Bereich des Venturihalses, in welchem eine ausreichend hohe Gasgeschwindigkeit vorliegt.

Die erfindungsgemäße Feststoff-Abweiseinrichtung wirkt in mehrfacher Hinsicht. Sie übt auf die an der Wandung des Diffusors herunterrutschenden Feststoffe einen Sprungschanzeneffekt aus. Die Feststoffe werden durch eine örtliche Umlenkung von der Wandung abgewiesen und über den Umfang verteilt. Da die Strömungsgeschwindigkeit im Bereich der Wandung wesentlich niedriger ist als im inneren Bereich, führt diese Ablenkung dazu, daß die Feststoffe in einen Bereich mit einer Strömungsgeschwindigkeit gelangen, welche zum Mitführen oder Halten der Feststoffe in einem Schwebezustand ausreicht. Abgesehen von diesem Sprungschanzeneffekt bewirkt die Ablenkung eine Verwirbelung des durch die Venturidüse strömenden Gases. Dadurch wird die Geschwindigkeitsverteilung des Gases über den Durchmesser der Venturidüse vergleichmäßigt und der Randbereich mit stark geringerer Strömungsgeschwindigkeit wesentlich verkleinert. Beide Effekte ermöglichen es, daß gegenüber dem Stand der Technik die Gasströmung wesentlich weiter abgesenkt werden kann, bevor ein Herausrutschen der Feststoffe aus dem Behälter durch den Venturihals eintritt. Hierdurch eignet sich der erfindungsgemäße Gaseinlaß insbesondere auch für einen Wirbelschichtreaktor, in welchem eine Trocknung stattfindet, Gase absorbiert werden oder chemische Reaktionen stattfinden, beispielsweise für Rauchgasentschwefelungsanlagen.

Wenn das Gas in einem rechten Winkel der Venturidüse zugeführt wird, dann kann man im Bereich der Innenseite der Umlenkung zumindest ein Strömungsleitblech anordnen.

Hierdurch lassen sich Unterdruckbereiche und damit ein Feststoffdurchfall in den Randzonen vermeiden.

Die Feststoff-Abweiseinrichtung kann unterschiedlich gestaltet sein. Eine besonders einfache Ausführungsform besteht darin, daß die Feststoff-Abweiseinrichtung durch einen Übergangskegel zwischen dem Venturihals und dem Diffusor gebildet ist, welcher einen größeren Öffnungswinkel hat als der Diffusor. Eine solche Feststoff-Abweiseinrichtung ist zugleich wenig verschleißanfällig.

Alternativ ist es auch möglich, daß die Feststoff-Abweiseinrichtung durch eine Einschnürung in der Wandung des Diffusors gebildet ist. Eine solche Einschnürung ist ebenfalls sehr kostengünstig herstellbar und vermeidet, daß Feststoffanreicherungen (Strähnen) mit hohem Impuls entgegen der Gasströmung im Randbereich durch die Venturidüse rutschen.

Besonders wirksam arbeitet die Feststoff-Abweiseinrichtung, wenn sie durch eine Einschnürung im Übergangsbereich zwischen dem Diffusor und dem Venturihals gebildet ist.

Der Bereich, bis in den die Gasgeschwindigkeit abgesenkt werden kann, ohne daß Feststoffe in den Venturihals rutschen, kann besonders weit nach unten reichen, wenn die Venturidüse mehrere Feststoff-Abweiseinrichtungen nach zumindest einem der Ansprüche 2 - 4 enthält.

Zusätzlich zu den beschriebenen Effekten haben alle Feststoff-Abweiseinrichtungen den Vorteil, daß sie als Turbulator wirken und deshalb zu einer Erhöhung der Turbulenz in der Gas-Feststoffströmung beitragen und dabei die Wärme- und Stoffübertragung erheblich verbessern.

Der erfindungsgemäße Gaseinlaß kann für sich allein den Einlaß eines Behälters bilden. Möglich ist es jedoch auch, über einen größeren Querschnitt eines Behälters mehrere Venturidüsen parallel zueinander anzuordnen, damit sich in dem Behälter eine möglichst gleichmäßige Strömungsverteilung ergibt.

Bei einem im Querschnitt kreisförmigen Behälter und Gaseinlaß ist der Platz optimal genutzt, wenn der Gaseinlaß innerhalb eines kreisförmigen Querschnittes sieben Venturidüsen enthält.

Die Erfindung läßt verschiedene Ausführungsformen zu. Zur weiteren Verdeutlichung ihres Grundprinzips sind drei davon in der Zeichnung dargestellt und werden nachfolgend beschrieben. Diese zeigt schematisch in
- Fig.1: einen senkrechten Schnitt durch eine Venturieinzeldüse nach der Erfindung,
- Fig.2: einen senkrechten Schnitt durch eine zweite Ausführungsform einer Venturieinzeldüse,
- Fig.3: einen senkrechten Schnitt durch eine dritte Ausführungsform einer Venturieinzeldüse.

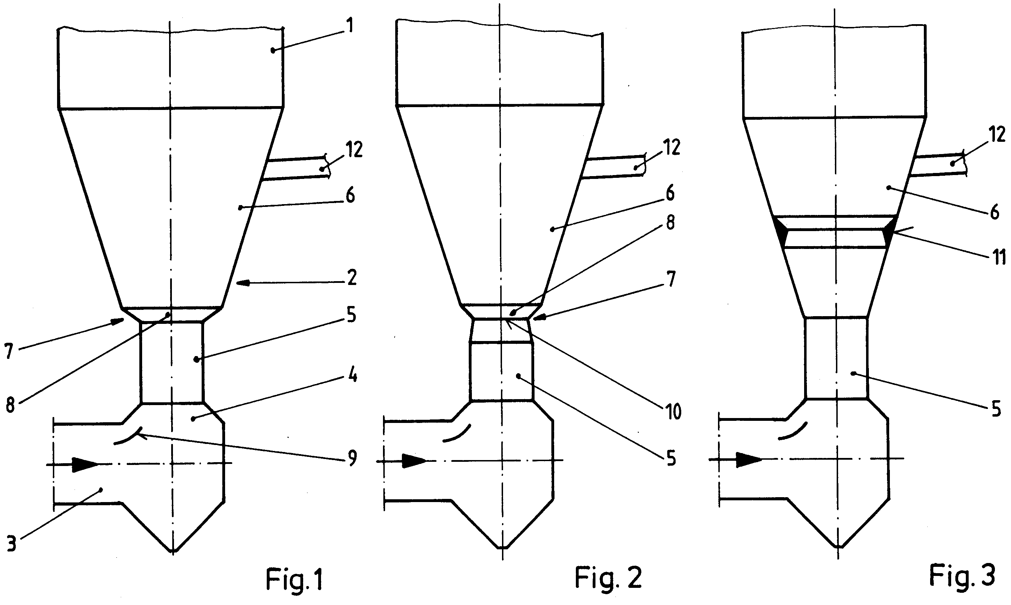

Die Figur 1 zeigt ein unteres Ende eines Behälters 1, in welchem von unten her Gas aus einem Gaskanal 3 über eine Venturidüse 2 einströmt. Feststoff wird über einen Feststoffeinlaß 12 zugeführt. Die Venturidüse 2 hat einen konvergierenden Einlaß 4, einen Venturihals 5 und einen relativ langen Diffusor 6 mit ausreichend großem Öffnungswinkel, um Turbulenzen und Ablösungen zu erzeugen.

Zwischen dem Diffusor 6 und dem Venturihals 5 ist eine Feststoff-Abweiseinrichtung 7 angeordnet, welche bei dieser Ausführungsform einen Übergangskegel 8 bildet, der zum Venturihals 5 hin geringeres Gefälle hat als der Diffusor 6. Dadurch werden Feststoffe, welche sich im Bereich der Wandung des Diffusors 6 befinden bzw. dort herunterströmen, im Bereich der Feststoff-Abweiseinrichtung 7 zur Mitte der Venturidüse 2 hin abgelenkt.

Die Figur 1 läßt zusätzlich erkennen, daß im Gaskanal 3 ein Strömungsleitblech 9 nahe der Innenseite der Umlenkung vom Gaskanal 3 in den Einlaß 4 der Venturidüse 2 angeordnet ist. Dieses Strömungsleitblech 9 sorgt dafür, daß auch kurveninnenseitig eine ausreichend starke Strömung entsteht, um dort Unterdruckgebiete zu verhindern.

Bei der Ausführungsform nach Figur 2 ist die Feststoff-Abweiseinrichtung 7 durch eine Einschnürung 10 gebildet. Der Venturihals 5 hat unterhalb dieser Einschnürung 10 einen größeren Querschnitt als die Einschnürung 10. Es ist allerdings nicht zwingend erforderlich, daß die Einschnürung nach oben hin in den Übergangskegel 8 übergeht. Möglich ist es auch, den Diffusor 6 so auszubilden, daß seine Wandung ohne Umlenkung glatt bis zur engsten Stelle der Einschnürung 10 verläuft und sich nur der Venturihals 5 gegenüber dieser Einschnürung 10 im Querschnitt erweitert.

Bei der Ausführungsform nach Figur 3 ist eine Einschnürung 11 in der Wandung des Diffusors 6 mit vertikalem Abstand zum Venturihals 5 vorgesehen. Nicht gezeigt ist, daß diese Einschnürung 11 auch zusätzlich zu der in Figur 2 gezeigten Einschnürung 10 vorgesehen werden kann. Es ist auch möglich, in der Wandung des Diffusors 6 mehrere Einschnürungen 11 übereinander anzuordnen.

Die vorteilhafte Gestaltung des erfindungsgemäßen Gaseinlasses wird durch das nachfolgende Beispiel besonders deutlich.

In einer Rauchgasentschwefelungsanlage, welche zwei kohlenstaubgefeuerten Kesseln nachgeschaltet ist, sollte der Teillastbereich der nach dem Verfahren der zirkulierenden Wirbelschicht arbeitenden Entschwefelungsanlage so erweitert werden, daß damit der Kessellastbereich ohne Einschränkungen und ohne Rauchgasrezirkulation gefahren werden konnte. Die beiden Kessel haben eine Leistung von zusammen 100 MW mit einer Minimalleistung von insgesamt 25 MW. Mit der ursprünglichen Konstruktion des Entschwefelungsreaktors konnte die Kesselanlage zwischen insgesamt 60 und 100 MW betrieben werden, ohne daß der Feststoff der Wirbelschicht durch den Venturihals 5 rutschte, was zu einem Betriebsausfall führen würde.

Durch Einbau des Strömungsleitbleches 9 konnte der Lastbereich auf 50 bis 100 MW stabil erweitert werden. Eine Erweiterung des Lastbereiches auf 35 bis 100 MW trat durch den Einbau der Feststoff-Abweiseinrichtung 7 ein. Eine weitere Feststoff-Abweiseinrichtung in Form der Einschnürung 10 vergrößerte den Bereich auf 30 bis 100 MW. Der erforderliche Lastbereich von 25 bis 100 MW wurde erreicht, nachdem im Bereich des Diffusors 6 zwischen dem Venturihals 5 und der Feststoffeinlaß 12 zwei Feststoff-Abweiseinrichtungen in Form der Einschnürung 11 eingesetzt wurden.

Durch die beschriebenen Maßnahmen erhöhte sich der Leerrohrdruckverlust bei Maximallast um ca 2 mbar. Dem gegenüber konnte der Wirbelbettdruckverlust unter Beibehaltung der Entschwefelungsleistung, also des SO₂-Entschwefelungsgrads und des Kalkverbrauchs um ebenfalls 2 mbar reduziert werden. Somit blieb der Gesamtdruckverlust der Entschwefelungsanlage konstant.

Es zeigte sich also, daß mit den beschriebenen Feststoff-Abweiseinrichtungen neben der Erhöhung des Lastbereiches auch eine deutliche Verbesserung des Wärme- und Stoffaustauschs aufgrund der Turbulenzerhöhung in der Gas-Feststoffströmung eintritt, was die Feststoff-Abweisvorrichtungen zum Beispiel bei Trocknungsanlagen und Entschwefelungsanlagen nach dem Prinzip der zirkulierenden Wirbelschicht sinnvoll macht.

### Bezugszeichenliste

- 1: Behälter
- 2: Venturidüse
- 3: Gaskanal
- 4: Einlaß
- 5: Venturihals
- 6: Diffusor
- 7: Feststoff-Abweiseinrichtung
- 8: Übergangskegel
- 9: Strömungsleitblech
- 10: Einschnürung
- 11: Einschnürung
- 12: Feststoffeinlaß

## Patentansprüche

1. Gaseinlaß zum Zuführen von Gas an der Unterseite eines senkrecht von Gas durchströmten Behälters (1), welcher von dem Gas in einem Schwebezustand gehaltene Feststoffe enthält, beispielsweise einen Windsichter, einen Trockner oder einen Reaktor, wobei der Gaseinlaß (4) eine vertikal anzuordnende Venturidüse (2) mit einem Venturihals (5) und einem Diffusor (6) hat, **gekennzeichnet** durch eine Feststoff-Abweiseinrichtung (7) zum Ablenken von entlang der Wandung des Diffusors (6) nach unten in den Venturihals (5) rutschenden Feststoffen von der Wandung weg in einen inneren Bereich des Venturihalses (5), in welchem eine ausreichend hohe Gasgeschwindigkeit vorliegt.

2. Gaseinlaß nach Anspruch 1, **dadurch gekennzeichnet**, daß die Feststoff-Abweiseinrichtung (7) durch einen Übergangskegel (8) zwischen dem Venturihals (5) und dem Diffusor (6) gebildet ist, welcher einen größeren Öffnungswinkel hat als der Diffusor (6).

3. Gaseinlaß nach Anspruch 1, **dadurch gekennzeichnet**, daß die Feststoff-Abweiseinrichtung (7) durch eine Einschnürung (11) in der Wandung des Diffusors (6) gebildet ist.

4. Gaseinlaß nach Anspruch 1, **dadurch gekennzeichnet**, daß die Feststoff-Abweiseinrichtung (7) durch eine Einschnürung (10) im Übergangsbereich zwischen dem Diffusor (6) und dem Venturihals (5) gebildet ist.

5. Gaseinlaß nach zumindest einem der vorangehenden Ansprüche, **dadurch gekennzeichnet**, daß sie mehrere Feststoff-Abweiseinrichtungen (7) nach zumindest einem der Ansprüche 2 - 4 enthält.

6. Gaseinlaß nach zumindest einem der vorangehenden Ansprüche, **dadurch gekennzeichnet**, daß er mehrere Venturidüsen (2) parallel zueinander enthält.

7. Gaseinlaß nach zumindest einem der vorangehenden Ansprüche, **dadurch gekennzeichnet**, daß er innerhalb eines kreisförmigen Querschnittes sieben Venturidüsen (2) enthält.
